# EUROPEAN PATENT SPECIFICATION

(11) **EP 1 347 619 B1**
(45) Date of publication and mention of the grant of the patent: **12.09.2007**
(21) Application number: 03251798.9
(22) Date of filing: 21.03.2003
(51) Int. Cl.: B60R 25/00, H04L 29/08, H04L 12/24

(54) **Method and system for storing user preferences**
System und Verfahren zum Speichern von Benutzerpräferenzen
Méthode et système de stockage de préférences utilisateur

(30) Priority: 22.03.2002 US 104246
(43) Date of publication of application: 24.09.2003
(73) Proprietor: SUN MICROSYSTEMS, INC., Palo Alto, California 94303 (US)
(72) Inventor: Mocek, Darryl J., San Jose, 95136-2011 California (US); Grigoriev, Nikolay Georgievich, St Petersburg 192212 (RU); Petrovsky, Sergey, Moscow 111141 (RU)
(74) Representative: Collins, John David

(56) References cited:
- WO-A-01/31515
- US-A- 6 028 537
- US-A- 6 092 020

## Description

### BACKGROUND OF THE INVENTION

### 1. Field of the Invention

This invention relates generally to network-centric telematics services and applications supplied to vehicles and more particularly to a telematics system configured to provide storage for user preferences.

### 2. Description of the Related Art

The electronic content and sophistication of automotive designs has grown markedly. Microprocessors are prevalent in a growing array of automotive entertainment safety and control functions. Consequently, this electronic content is playing an increasing role in the sales and revenues of the automakers. The features provided by the electronic content include audio systems, vehicle stability control, driver activated power train controls, adaptive cruise control, route mapping, collision warning systems, etc. The significant increase of the electronic content of land based vehicles has concomitantly occurred with the explosive growth of the Internet and the associated data driven applications supplied through mobile applications.

Telematics, a broad term that refers to vehicle-based wireless communication systems and information services, promises to combine vehicle safety, entertainment and convenience features through wireless access to distributed networks, such as the Internet. Telematics offers the promise to move away from the hardware-centric model from audio and vehicle control systems that are built into devices that are custom designed for each vehicle, to infotainment delivered by plug-and-play hardware whose functionality can be upgraded through software loads or simple module replacement. Furthermore, new revenue streams will be opened up to automobile manufacturers and service providers through the products and services made available through telematics.

Since these infotainment systems integrate entertainment and information within a common envelope, the systems need to be highly integrated, open and configurable. However, the electronic systems currently on the market are custom designed for the make, model, year and world region in which the vehicle is sold. Additionally, the electronic systems being used today are linked by proprietary busses having severely limited bandwidth that are inadequate for data-intensive services combining information entertainment and safety. The proprietary and customized systems require a developer to know the underlying software and hardware application program interfaces (APIs) in order to develop applications for future infotainment systems. However, numerous proprietary and customized systems are spread across the various makes and models of the vehicles in the marketplace and even within the same models from year to year. Thus, the heterogeneous nature of the various systems essentially eliminates any benefits of economies of scale since equipment and software must be tailored to each model permutation.

Furthermore, a user's desired settings or preferences for the configuration of a telematics system need to be stored so that the user only sets the preferences once. Additionally, the user must have easy access to add, delete, or modify the preferences. Additionally, any changes to the preferences while the in-vehicle telematic control unit is in a sleep mode must be handled in a manner such that the changes will be stored on the server side until the telematic control unit is "awakened". Therefore, the in-vehicle telematics system will not be able to update the preferences until the vehicle is powered.

WO01/31515 describes a system for remotely collecting data from a locomotive. An onboard monitor is located aboard the locomotive and under the control of a remote monitoring and diagnostics centre, the onboard monitor periodically collects information from the locomotive and transmits it to the remote monitoring and diagnostics centre. A configuration file associated with the remote monitoring diagnostics centre can be amended, and this amendment may affect control of the onboard monitor. The changed configuration file is transmitted to the onboard monitor.

US 6,092,020 describes a method for obtaining data on a traffic situation in a road network in which vehicles are equipped with sensory analysis equipment which collects appropriate data. The data to be collected is determined by configuration settings.

US 6,028,537 discloses a vehicle communication and remote control system. The system described has various aspects, including an aspect providing vehicle personalisation which is remotely affected using a RF transmission system. Using this system an owner wishing to reprogram a vehicle may call a service provider who affects reprogramming by transmitting RF signals to the vehicle.

In view of the forgoing, there is a need for a system and method to store user and system preferences for a telematics control unit in order for a user and the system to make changes to the preferences at will.

### SUMMARY OF THE INVENTION

The invention is defined by a system according to claim 1, a telematics control unit according to claim 8, methods according to claims 12 and 21, and carrier methods according to claims 20 and 23.

Broadly speaking, the present invention fills these needs by providing storage for new preferences and preference modifications where the preferences and the modifications are stored in a client, on a server and communicated through synchronized channels. It should be appreciated that the present invention can be implemented in numerous ways, including as an apparatus, a system, a device, or a method. Several inventive embodiments of the present invention are described below.

According to the present invention, there is provided, a system for storing preferences on a telematics client, comprising: a telematics server configured to receive a request containing modification data for a preference, and to store the modification data for the preference in storage of a preference server of the telematics server, the telematics server including a server side communications framework in communication with the preference server, a telematics control unit having a preference manger for storing the preferences, the telematics control unit including a client side communications framework in communication with the preference manager, wherein the preference manager and the preference server are configured to synchronize over a network connection to allow the modification data to be communicated between the preference server and the preference manager, and wherein the telematics control unit includes a software stack having a hardware layer, an operating system layer, a Java virtual machine layer, an open services gateway initiative layer and a Java telematics client layer, and wherein the telematics control unit includes a channel monitor configured to monitor available bandwidth, the channel monitor further configured to switch to a channel within the network having a higher bandwidth based upon availability. The telematics server may be a Java provisioning server.

The invention further provides a telematics control unit, comprising: a preference manager for storing preferences, a client side communications framework in communication with the preference manager; a software stack having a hardware layer, an operating system layer, a Java virtual machine layer, an open services gateway initiative layer and Java telematics client layer, and a channel monitor configured to monitor available bandwidth, the channel monitor further configured to switch to a channel within the network having a higher bandwidth based upon availability, wherein the preference manager is configured to synchronise with a preference server of a telematics server, the telematics server being configured to receive a request containing modification data for a preference, the modification data being stored on said preference server, and said synchronisation allowing modification data to be communicated between the preference server and the preference manager.

According to the present invention, there is also provided a method for storing preferences associated with a telematics system, comprising: receiving at a telematics server a request containing modification data for a preference, storing the modification data in storage of a preference server of said telematics server, synchronizing the preference server with a preference manager of a telematics control unit the telematics control unit comprising a software stack having a hardware layer, an operating system layer, a Java virtual machine layer, an open services gateway initiative layer and a Java telematics client layer, the telematics control unit further comprising a channel monitor configured to monitor available bandwidth the channel monitor further configured to switch to a channel within the network having a higher bandwidth based upon availability, transmitting the modification data to the preference manager; and storing the modification data in storage of the telematics control unit.

According to the present invention, there is provided a method for storing preferences at a telematics control unit, the telematics control unit comprising a preference manager for storing preferences, a client side communications framework in communication with the preference manager, a software stack having a hardware layer, an operating system layer, a Java virtual machine layer, an open services gateway initiative layer and Java telematics client layer, the telematics control unit further comprising a channel monitor configured to monitor available bandwidth, the channel monitor further configured to switch to a channel within the network having a higher bandwidth based upon availability, the method comprising: synchronising said preference manager with a preference server of a telematic server, said synchronization causing modification data to be communicated between the preference server and the preference manager, wherein the telematics server is configured to receive a request containing modification data for a preference, the modification data being stored on said preference server.

### BRIEF DESCRIPTION OF THE DRAWINGS

The invention, together with further advantages thereof, may best be understood by reference to the following description taken in conjunction with the accompanying drawings.
Figure 1 is a high level schematic overview of an automotive telematics system in accordance with one embodiment of the invention.
Figure 2 is a schematic diagram of a telematics client communicating through a wireless network with a telematics server in accordance with one embodiment of the invention.
Figure 3 is a three dimensional pictorial representation of a telematics client implementation of the client side stack of Figure 2 in accordance with one embodiment of the invention.
Figure 4 is a high level schematic diagram of the interaction between a carlet and a communications framework on the client side of a telematics system in accordance with one embodiment of the invention.
Figure 5 is a high level schematic diagram of a telematics system providing a preference service for the storage of preferences in accordance with one embodiment of the invention.
Figure 6 is a schematic diagram providing a two dimensional view of the layers of the software stack of the TCU in accordance with one embodiment of the invention.
Figure 7 illustrates communication between a carlet application and the communications framework on the client side in accordance with one embodiment of the invention.
Figure 8 is a flowchart diagram of the method operations performed for setting a preference in a TCU in accordance with one embodiment of the invention.

### DETAILED DESCRIPTION OF THE PREFERRED EMBODIMENTS

An invention is disclosed for telematics system having the capability to store preferences and modification data for the preferences. In the following description, numerous specific details are set forth in order to provide a thorough understanding of the present invention. It will be apparent, however, to one skilled in the art that the present invention may be practiced without some or all of these specific details. In other instances, well known process steps have not been described in detail in order not to unnecessarily obscure the present invention.

The embodiments of the invention described herein provide a system and method for storing preferences defined by a user with respect to a telematics system for a vehicle. As will be explained in more detail below, the preferences allow for the configuration of a telematics control unit to provide the desired functionality as dictated by a user. That is, if the user desires to pre-set certain radio stations, environmental conditions in the cabin, infotainment settings, convenience settings, etc., then the user may specify these desired settings as preferences. These preferences must be stored so that each time the user starts the vehicle, the preferences will be set. In one embodiment, the preferences are input, uploaded, or modified to a server when the telematics control unit of the vehicle is in a sleep mode, therefore, the preferences are stored on the server and transmitted to the client upon startup and establishment of a communication link with the client. It should be appreciated that the preferences can also be selected from the client and uploaded to the server.

An in-vehicle telematics control unit (TCU) can tie into any of the control systems, safety systems, entertainment systems, information systems, etc., of the vehicle. It will be apparent to one skilled in the art that the client side stack of the TCU is utilized to access a vehicle interface component for accessing in-vehicle devices, such as the speedometer, revolutions per minute (rpm) indicator, oil pressure, tire pressure, etc. Thus, client side applications sitting in the TCU will allow for the functionality with respect to the vehicle systems as well as infotainment applications.

In one embodiment, the telematics system deploys Java technology. It should be appreciated that Java technology's platform-independence and superior security model provide a cross-platform solution for the heterogeneous systems of a vehicle while maintaining a security architecture protecting against viruses and unauthorized access. Thus, the content or service provider is insulated against the myriad of car platforms while vehicle manufacturers are protected against hacker threats. In addition, Java application program interfaces (APIs) are available to support telematics mediums, such as speech recognition through Java Speech API (JSAPI), media delivery through Java Media Framework (JMF) and wireless telephony through Wireless telephony communications APIs (WTCA), etc.

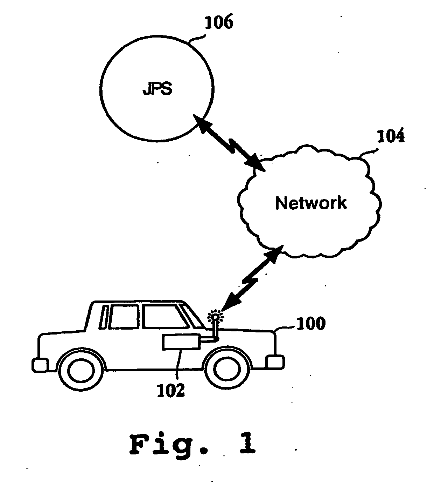

Figure 1 is a high level schematic overview of an automotive telematics system in accordance with one embodiment of the invention. A client/server architecture relying on standards and principles of modular design allows for functionality of the telematics system to be delivered to the customer through wireless access. The server side includes Java provisioning server (JPS) 106 in communication with network 104.

The client side includes telematics control unit (TCU) 102 contained within the body of land based vehicle 100. TCU 102 is enabled to communicate with network 104 through wireless access. Of course, network 104 can be any distributed network such as the Internet and the wireless access protocol (WAP) can be any suitable protocol for providing sufficient bandwidth for TCU 102 to communicate with the network. It should be appreciated that the client/server architecture of Figure 1 allows for the evolution from hard wired, self contained components to platform based offerings relying on software and upgrades. Thus, a service provider controlling JPS 106 can deliver an unbundled, open end-to-end solution enabling plug and play applications. For example, the service can be a tier-based service similar to home satellite and cable services. It will be apparent to one skilled in the art that an open platform, such as frameworks based on Java technology, enables a developer to create executable applications without regard to the underlying hardware or operating system. While Figure 1 illustrates an automobile, it should be appreciated that TCU 102 can be incorporated in any vehicle or mode of transportation whether it is land based or non-land based. For example, a boat, a plane, a helicopter, etc. can incorporate TCU 102.

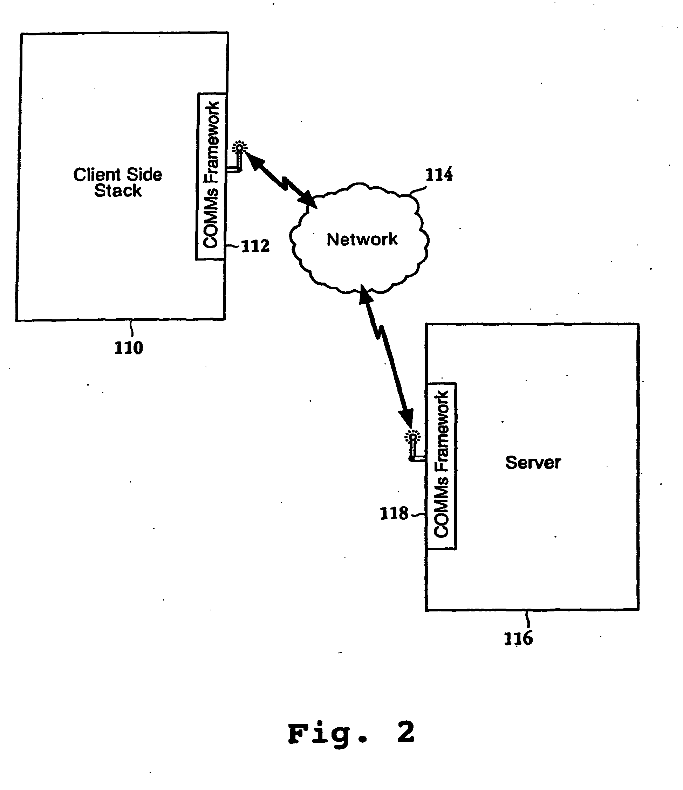

Figure 2 is a schematic diagram of a telematics client communicating through a wireless network with a telematics server in accordance with one embodiment of the invention. Client side stack 110 includes the necessary layers for a client application, also referred to as a manager or a carlet, to be executed to provide functionality. As will be explained further below, the carlet has access to each layer of the client side stack 110. Included in client side stack 110 is client communication framework 112. Client communication framework 112 enables communication between the client side stack 110 and an application on server 116 through network 114. It should be appreciated that server 116 is not limited to a wireless connection. For example, server 116 can be hardwired into network 114. One skilled in the art will appreciate that where server 116 communicates through a wireless connection with network 114, the communication proceeds through server communication framework 118. With respect to an embodiment where server 116 is hardwired to network 114, the server can communicate with network 114 through a network portal (e.g. the Internet) rather than server communication framework 118. Additionally, network 114 can be any suitable distributed network, such as the Internet, a local area network (LAN), metropolitan area network (MAN), wide area network (WAN), etc.

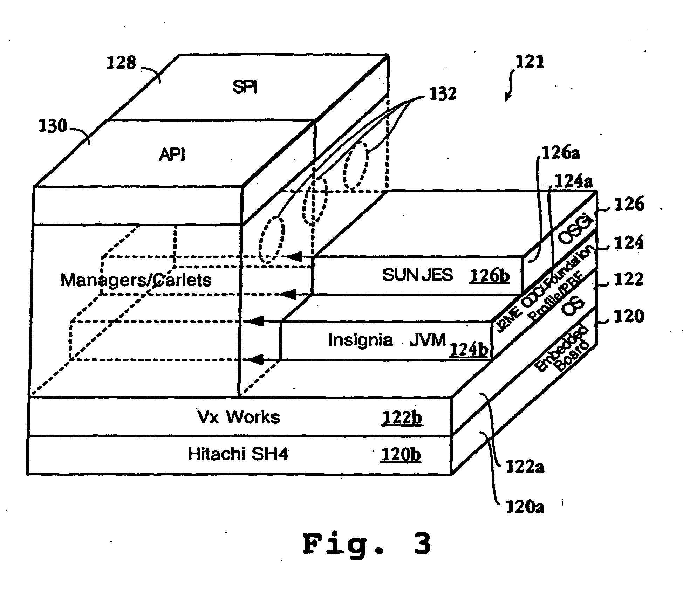

Figure 3 is a three dimensional pictorial representation of a telematics client implementation of the client side stack of Figure 2 in accordance with one embodiment of the invention. Client side implementation 121 includes hardware layer 120 of the client includes an embedded board containing a telematics control unit (TCU). As mentioned with reference to Figure 1, the TCU is incorporated into a land based vehicle. In one embodiment, the TCU is in communication with the electronic components of a vehicle through a vehicle bus or other communication means. These components include the measurement of vehicle operating and safety parameters, such as tire pressure, speed, oil pressure, engine temperature, etc., as well as information and entertainment components, such as audio system settings, internet access, environmental control within the cabin of the vehicle, seat positions, etc. One skilled in the art will appreciate that the telematics control unit is capable of integrating the functionality of various handheld information and entertainment (infotainment) devices, such as mobile phones, personal digital assistants (PDA), MP3 players, etc.

Still referring to Figure 3, operating system layer 122 sits above hardware layer 120. Java virtual machine (JVM) layer 124 sits on top of operating system (OS) layer 122 and open services gateway initiative (OSGI) layer 126 sits on top of the JVM layer. It should be appreciated that the standard for JVM layer 124 includes Java 2 Platform Micro Edition (J2ME), Connected Device Configuration (CDC), Connected Limited Device Configuration (CLDC), Foundation Profile, Personal Profile or Personal Basis Profile. One skilled in the art will appreciate that J2ME Foundation Profile is a set of APIs meant for applications running on small devices that have some type of network connection, while J2ME CDC Personal Profile or Personal Basis Profile provides the J2ME CDC environment for those devices with a need for a high degree of Internet connectivity and web fidelity. The standards for each of the layers of the stack are provided on the right side of client side implementation 121. In particular, OSGI 126a, J2ME CDC 124a, OS 122a, and embedded board 120a are standards and to the left of the standards are examples of actual products that implement the standards. For example, OSGI 126a standard is implemented by Sun's Java Embedded Server (JES) 2.1 126b, J2ME 124a standard is implemented by Insignia's Virtual Machine 124b, OS 122a is implemented by Wind River's VxWorks real time operating system 122b, and embedded board 120a is an embedded personal computer based board such as Hitachi's SH4. It should be appreciated that the actual products are exemplary only and not meant to be limiting as any suitable product implementing the standards can be utilized.

Carlets 132 of Figure 3, have access to each layer above and including OS layer 122. Application program interface (API) layer 130 is the layer that carlets use to communicate with the JTC. Service provider interface (SPI) layer 128 is a private interface that managers have among each other. One skilled in the art will appreciate that OSGI layer 126 provides a framework upon which applications can run. Additional functionality over and above the JVM, such as lifecycle management is provided by OSGI layer 126. It should be appreciated that the open services gateway initiative is a cross industry working group defining a set of open APIs for a service gateway for a telematics systems. These APIs consist of a set of core framework APIs. In order to deploy services and their implementations OSGI defines a packaging unit called a service bundle. A service bundle is a Java Archive (JAR) file containing a set of service definitions along with their corresponding implementation. Both infrastructure services and carlets are deployed as service bundles. Some of the functionality for arbitrating, controlling and managing devices and resources, e.g., speakers, cell phones, etc., by OSGI layer 126. However, one skilled in the art will appreciate that a separate arbitration service may also be required. As used herein, a carlet is a Java application. For each function or task to be processed on the client side or between the client and server sides, a carlet is invoked to manage the operation. In this manner, carlets can be independently written, tested, and launched for use on a telematics system. By way of example, a carlet can be written to control or monitor the activity of automobile components (e.g., tires, engine oil, wiper activity, steering tightness, maintenance recommendations, air bag control, transmission control, etc.), and to control or monitor applications to be processed by the telematics control unit (TCU) and interacted with using the on-board automobile monitor. As such, specialized carlets can be written to control the audio system, entertainment modules (e.g., such as on-line games or movies), voice recognition, telecommunications, email communications (text and voice driven), etc. Accordingly, the type of carlets that can be written is unlimited. Carlets may be pre-installed or downloaded from a server. A carlet may or may not have an API which may be invoked by other carlets and it may or it may not have running threads of its own.

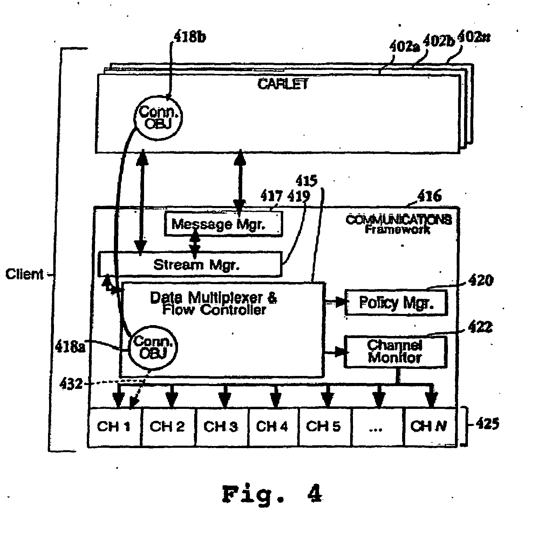

Figure 4 is a high level schematic diagram of the interaction between a carlet and a communications framework on the client side of a telematics system in accordance with one embodiment of the invention. It should be appreciated that the server side has a similar communication framework to establish and enable synchronous communication between the client side (e.g., a telematics control unit on a vehicle) and the server side (e.g., a Java telematics server). The communications framework 416 includes a message manager 417, a stream manager 419, a data multiplexer and flow controller 415, a policy manager 420, a channel monitor 422, and an interface to the various physical channels available to the communications framework of the client side.

Still referring to Figure 4, when a particular carlet application 402 is requested, the carlet will communicate with the stream manager 419 and request that a connection be established. In response, the stream manager 419 will request a connection object (Conn. OBJ) 418a from the data multiplexer and flow controller 415. Once a channel satisfying the request is available, the data multiplexer and flow controller 415 will return a connection object (Conn. OBJ) 418b back to the carlet. Thus, a communication link is established between the carlet application 402 via the connection objects 418a and 418b of the data multiplexer and flow controller 415. In one embodiment, the connection object 418a of the data multiplexer and flow controller 415 has the ability to switch between channels 425 that are available to the communications framework 416 of the client side. Here, code contained in the policy manager enables selection of different channels depending upon availability, the type of communication desired, bandwidth requirements for a given data transfer or transfers, payment of a bandwidth fee, subscription level, etc.

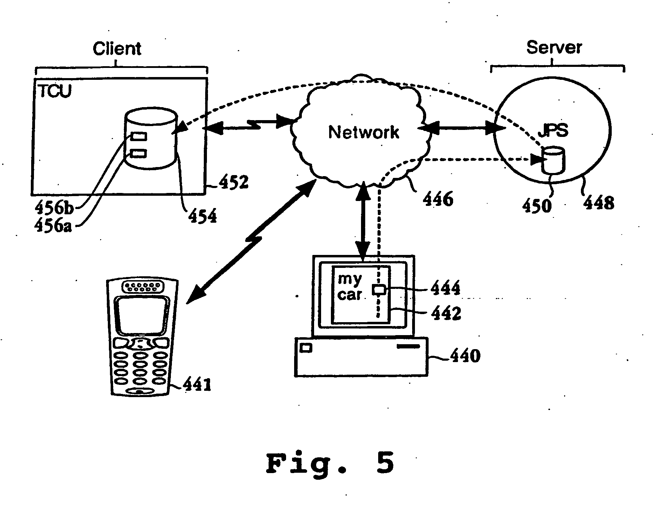

Figure 5 is a high level schematic diagram of a telematics system providing a preference service in accordance with one embodiment of the invention. Here, a user can set a preference from a workstation such as personal computer 440. Personal computer 440 is connected to network 446 to access web page 442 to allow a user to set or modify preferences. For example, a user may desire to set a radio station as a preference from a home computer so that the radio station will be available as a preference the next time the user's vehicle containing a telematics control unit (TCU) is started. In one embodiment, web page 442 includes a list of preferences 444 of the user. Of course, the user can specify a preference rather than choose from a list when customizing preferences. The user has the ability to change, add, or delete preferences 444 from the list. One skilled in the art will appreciate that a user may also access the web page 442 through a handheld device 441, such as a personal digital assistant, web-enabled mobile phone, etc. In the example where the user desires to add preference 444 to preferences stored on the TCU of the vehicle, a request to store preference 444 is sent over network 446 to Java provisioning server (JPS) 448. JPS 448 stores the data for preference 444 in storage 450. It should be appreciated that JPS 448 is a component of the backend (server side) of the telematics system.

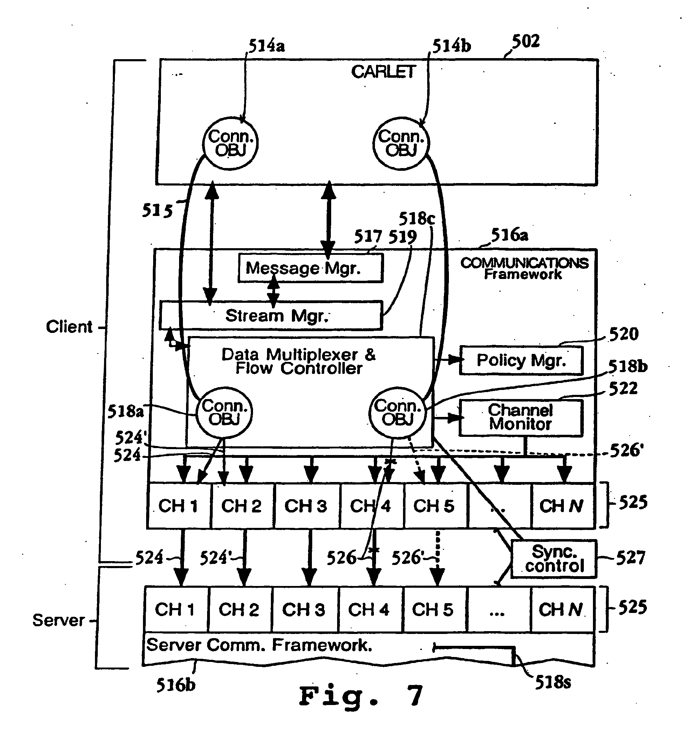

Still referring to Figure 5, JPS 448 includes a communication framework configured to synchronize a preference server of the JPS with a preference manager of TCU 452 through a communication framework of the TCU, as will be explained in more detail with reference to Figure 7. Upon synchronization of the preference server and the preference manager, the data for preference 444 is transmitted to storage 454 of TCU 452 (client side) through network 446. In one embodiment, synchronization between the preference server and the preference manager occurs upon startup of the vehicle containing TCU 452 is started. Once the data for preference 444 is stored in TCU 452, the preference is available to the user. That is, where the preference is a radio station, the radio station is now available to the user. It should be appreciated that preferences can either be system preferences 456a or user preferences 456b. System preferences include data that the telematics system stores such as vehicle identification number (VIN), license plate of vehicle, phone number to connect with JPS 448, etc. User preferences include infotainment and convenience preferences, i.e., preferences directed towards information and entertainment, such as radio station settings, climate control, email, news, etc. In one embodiment application preferences are included. One skilled in the art will appreciate that application preferences are preferences that the application stores for itself.

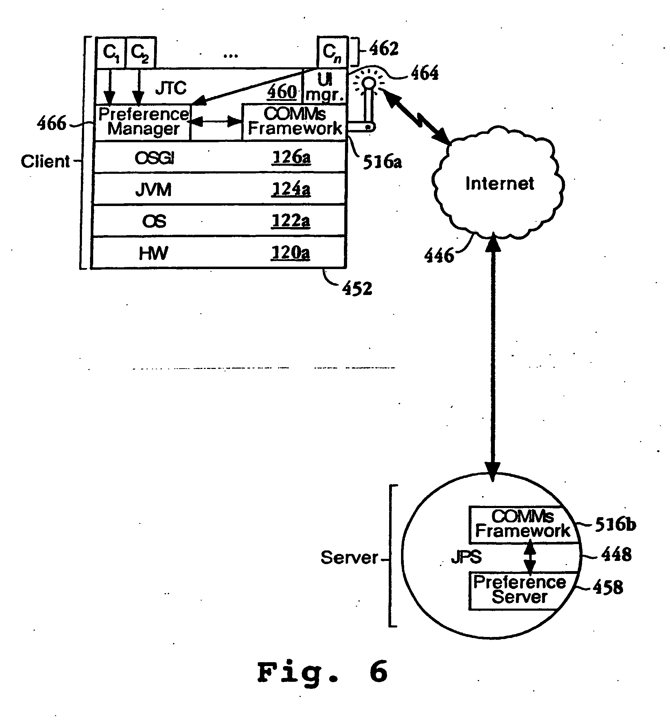

Figure 6 is a schematic diagram providing a two dimensional view of the layers of the software stack of the TCU in accordance with one embodiment of the invention. Software stack of TCU 452 defines standards for each layer. In particular, operating system (OS) layer 122a sits on top of hardware (HW) layer 120. Java virtual machine (JVM) layer 124a sits on top of OS layer 122a and open services gateway initiative (OSGI) layer 126a sits on top of JVM layer 124a. Java telematics client (JTC) layer 460 sits on top of OSGI layer 126a. Included within JTC layer 460 are is user interface (UI) manager 464, communication framework 516a and preference manager 466. It should be appreciated that UI manager 464 enables a user interface display within the vehicle for a user to interact with the TCU. Of course, the user interface may be a voice only interface. Communications framework 516a of TCU 452 is configured to communicate with communication framework 516b of JPS 448 through network 446 and is described in more detail with reference to Figure 7. Carlets C₁ through Cₙ 462 are client applications that provide the functionality a user specifies through the preferences of the preference manager in one embodiment of the invention. It should be appreciated that synchronization between the preferences on the client side and the preferences on the server side is accomplished through communication between the preference manager of the client side and the preference server of the server side. The communication link is established over a network through a communication frameworks 516a on the client side and 516b on the server side.

Figure 7 illustrates communication between a carlet application and the communications framework on the client side in accordance with one embodiment of the invention. For purposes of simplicity, the detailed components of the communications framework 516a are only shown from the perspective of the client side, although it should be understood that the server side has a similar communication framework 516b to establish and enable synchronous communication between the client side (e.g., a telematics control unit on a vehicle) and the server side (e.g., a telematics Java provisioning server). The Java provisioning server is charged with communicating with any number of clients. Such clients may be from any number of vehicles, makes, models, etc, while the client side is specific to a particular vehicle and TCU implementation.

The communications framework 516a will include a message manager 517, a stream manager 519, a data multiplexer and flow controller 518c (i.e., to function as a data pump), a policy manager 520, a channel monitor 522, and an interface to the various physical channels available to the communications framework of the client side. A synchronization control 527 is provided to interface between the client side and the server side. Specifically, the synchronization control 527 will enable communication between the data multiplexer and flow controller 518c of the client side, and the data multiplexer and flow controller 518s of the server side.

In operation, when a particular carlet application 502 is requested, the carlet will communicate 515 with the stream manager 519 and request that a connection be established. In the request, the carlet, in one embodiment, will provide properties detailing what type of connection is needed to satisfy the carlet's bandwidth requirements. As noted above, if the carlet is an MP3 carlet, the properties may designate a particular minimum transfer rate. In response, the stream manager 519 will request a connection object (Conn. OBJ) 518a from the data multiplexer and flow controller 518c. If a channel satisfying the desired bandwidth is available, the data multiplexer and flow controller 518c will return a connection object (Conn. OBJ) 514a back to the carlet. The message manager 517 is generally used to obtain connection objects for one-way communication, not unlike a one way email.

Accordingly, a communication link will be established between the carlet application 502 via the connection objects 514a and 518a of the data multiplexer and flow controller 518c. In one embodiment, the connection object 518a of the data multiplexer and flow controller 518c has the ability to switch between channels 525 that are available to the communications framework 516a of the client side. For instance, the data multiplexer and flow controller connection object 518a may initially establish a connection 524 to a channel 1 (CH 1). Connection 524 will thus communicate with a complementary channel 1 (CH 1) of the server side. The policy manager 520, is preferably a pluggable policy that can be custom tailored for the particular application or based on user specifications. For instance, the policy manager may contain code that will enable selection of different channels depending upon availability, the type of communication desired, bandwidth requirements for a given data transfer or transfers, payment of a bandwidth fee, subscription level, etc.

Assume in one example that the connection objects 514a and 518a have been established and are enabling data flow over connection 524 through channel 1. At some point in time, possibly when the client (e.g., a vehicle with a telematics control unit) enters a zone of higher bandwidth (e.g., such as a gas station with high wireless bandwidth services), channel 2 (CH 2) will become available. Its availability is detected by the channel monitor 522 of the communications framework 516a. If channel 2 is more desirable than channel 1, based on the policy set by the policy manager 520, the connection object 518a will initiate a switch to channel 2.

The switch to channel 2 will then be synchronized using the synchronization control 527, such that data being transferred between the client side and the server side achieve synchronization (i.e., thus preventing data loss during the switch). For instance, the data flow over connection 524 may be stopped causing a backup at the carlet application side. Any data still in the process of being transferred over channel 1 would be allowed to complete before allowing the connection object 518a to switch to channel 2. This synchronization between the client side and server side will enable channel switching, while preventing loss of data. Accordingly, once the connection object 518a has established synchronization between the client side and the server side, and the connection object 518a has switched from channel 1 to channel 2, the data flow is allowed to continue over connection objects 514a and 518a through channel 2. If any data was backed up at the client side, that data is then allowed to flow through channel 2.

This process would then continue depending upon the policy set by the policy manager, and based upon the continual monitoring of each of the available channels by the channel monitor 522. For instance, a carlet may have more than one connection open as illustrated by connection object 514b, and connection object 518b of data multiplexer and flow controller 518c.

In certain circumstances, a connection object 518b may lose a connection 526 due to a break in the transmission capability of a particular channel (e.g., by going out of range of a current wireless network). If this were to occur, the detection of the unavailability of channel 4 (CH 4), would be identified by the channel monitor 522. The connection object 518b would then determine whether the channel that became unavailable was actually in use. In one example, the channel may not actually be in use, but its loss in availability would still be detected, thus preventing its selection. In another example, it is assumed that channel 4 was in use. In such a case, data may have been lost due to the sudden drop in communication. When this occurs, the connection object 518b would communicate with a connection object 514b of the carlet to determine if data was in fact lost. If data was lost, a request would be made to the carlet for the lost data in case the carlet was sending data to the server, or a request would be made to the server for the lost data in case the server was sending data to the carlet.

The policy manager would then be queried to determine which one of the remaining channels being monitored by the channel monitor 522 would be most preferable to switch to, to continue the connection established between connection objects 514b and 518b. In this example, the connection object 518b would switch to connection 526' over channel 5 (CH 5), which may be a slower connection, although, the connection would be transparently re-established to enable continual data transmission. To complete the switch, the synchronization control 527 would work in conjunction with the client side and the server side to ensure that data being communicated between each of the data multiplexer and flow controllers 518c and 518s is synchronized, and any dropped data is retransmitted. Because the channel monitor 522 continues to monitor each of the channels, if the more preferred channel were to come back on, a transparent switch would again occur, as discussed with reference to the channel switch between connections 524 and 524'.

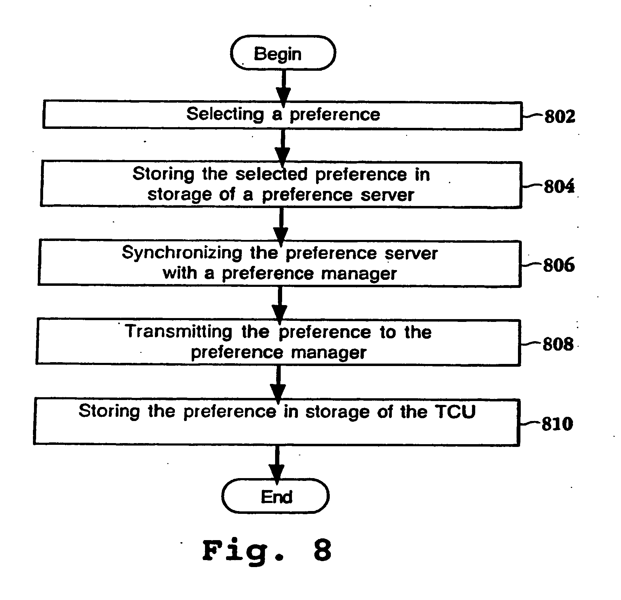

Figure 8 is a flowchart diagram of the method operations performed for setting a preference in a TCU in accordance with one embodiment of the invention. The method initiates with operation 802 where a preference is selected. In one embodiment, the preference is one of a system preference and a user preference. The method then advances to operation 804 where the selected preference is stored in storage associated with the preference server. One skilled in the art will appreciate that the selected preference can be designated through a web page accessed with a web enabled device such as a personal computer, portable computer, PDA, mobile phone, etc. The method then proceeds to operation 806 where the preference server is synchronized with the preference manager. A suitable process for synchronizing the preference server and the preference manager is described with reference to Figure 7. In one embodiment, a synchronization control in communication with the communication frameworks of the server and the client enables the synchronization. The method then moves to operation 808 where the selected preference is transmitted to the preference manager. In one embodiment, where the preference is uploaded while the TCU is in a sleep mode, the preference is transmitted from the server upon the vehicle containing the TCU starting. The method then advances to operation 810 where the selected preference is stored in storage associated with the TCU. It should be appreciated that the user has access to the selected preference upon transmittal of the preference to the TCU.

While Figure 8 discusses a method of storing a preference from the server to the client, it should be appreciated that the method can also be applied from the client to the server. That is, a user has the capability to add, change, or modify preferences from the vehicle through a user interface of the TCU. The selected preference is stored in the TCU and then the preference manager and the preference server is synchronized. The selected preference is then transmitted to the preference server form the preference manager, where it is stored on the server side.

As an overview, the Java virtual machine (JVM) is used as an interpreter to provide portability to Java applications. In general, developers design Java applications as hardware independent software modules, which are executed Java virtual machines. The Java virtual machine layer is developed to operate in conjunction with the native operating system of the particular hardware on which the communications framework 516c is to run. In this manner, Java applications (e.g., carlets) can be ported from one hardware device to another without requiring updating of the application code.

Unlike most programming languages, in which a program is compiled into machine-dependent, executable program code, Java classes are compiled into machine independent byte-code class files which are executed by a machine-dependent virtual machine. The virtual machine provides a level of abstraction between the machine independence of the byte-code classes and the machine-dependent instruction set of the underlying computer hardware. A class loader is responsible for loading the byte-code class files as needed, and an interpreter or just-in-time compiler provides for the transformation of byte-codes into machine code.

More specifically, Java is a programming language designed to generate applications that can run on all hardware platforms, small, medium and large, without modification. Developed by Sun, Java has been promoted and geared heavily for the Web, both for public Web sites and intranets. Generally, Java programs can be called from within HTML documents or launched standalone. When a Java program runs from a Web page, it is called a "Java applet," and when run on a Web server, the application is called a "servlet."

Java is an interpreted language. The source code of a Java program is compiled into an intermediate language called "bytecode". The bytecode is then converted (interpreted) into machine code at runtime. Upon finding a Java applet, the Web browser invokes a Java interpreter (Java Virtual Machine), which translates the bytecode into machine code and runs it. Thus, Java programs are not dependent on any specific hardware and will run in any computer with the Java Virtual Machine software. On the server side, Java programs can also be compiled into machine language for faster performance. However a compiled Java program loses hardware independence as a result.

Although the present invention is described based on the Java programming language, other programming languages may be used to implement the embodiments of the present invention, such as other object oriented programming languages. Object-oriented programming is a method of creating computer programs by combining certain fundamental building blocks, and creating relationships among and between the building blocks. The building blocks in object-oriented programming systems are called "objects." An object is a programming unit that groups together a data structure (instance variables) and the operations (methods) that can use or affect that data. Thus, an object consists of data and one or more operations or procedures that can be performed on that data. The joining of data and operations into a unitary building block is called "encapsulation."

An object can be instructed to perform one of its methods when it receives a "message." A message is a command or instruction to the object to execute a certain method. It consists of a method selection (name) and a plurality of arguments that are sent to an object. A message tells the receiving object what operations to perform.

One advantage of object-oriented programming is the way in which methods are invoked. When a message is sent to an object, it is not necessary for the message to instruct the object how to perform a certain method. It is only necessary to request that the object execute the method. This greatly simplifies program development.

Object-oriented programming languages are predominantly based on a "class" scheme. A class defines a type of object that typically includes both instance variables and methods for the class. An object class is used to create a particular instance of an object. An instance of an object class includes the variables and methods defined for the class. Multiple instances of the same class can be created from an object class. Each instance that is created from the object class is said to be of the same type or class.

A hierarchy of classes can be defined such that an object class definition has one or more subclasses. A subclass inherits its parent's (and grandparent's etc.) definition. Each subclass in the hierarchy may add to or modify the behavior specified by its parent class.

To illustrate, an employee object class can include "name" and "salary" instance variables and a "set_salary" method. Instances of the employee object class can be created, or instantiated for each employee in an organization. Each object instance is said to be of type "employee." Each employee object instance includes the "name" and "salary" instance variables and the "set_salary" method. The values associated with the "name" and "salary" variables in each employee object instance contain the name and salary of an employee in the organization. A message can be sent to an employee's employee object instance to invoke the "set_salary" method to modify the employee's salary (i.e., the value associated with the "salary" variable in the employee's employee object).

An object is a generic term that is used in the object-oriented programming environment to refer to a module that contains related code and variables. A software application can be written using an object-oriented programming language whereby the program's functionality is implemented using objects. Examples of object-oriented programming languages include C++ as well as Java.

Furthermore the invention may be practiced with other computer system configurations including hand-held devices, microprocessor systems, microprocessor-based or programmable consumer electronics, minicomputers, mainframe computers and the like. The invention may also be practiced in distributing computing environments where tasks are performed by remote processing devices that are linked through a network.

With the above embodiments in mind, it should be understood that the invention may employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations described herein that form part of the invention are useful machine operations. The invention also relates to a device or an apparatus for performing these operations. The apparatus may be specially constructed for the required purposes, such as the TCU discussed above, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The invention can also be embodied as computer readable code on a computer readable medium. The computer readable medium is any data storage device that can store data which can be thereafter be read by a computer system. Examples of the computer readable medium include hard drives, network attached storage (NAS), read-only memory, random-access memory, CD-ROMs, CD-Rs, CD-RWs, magnetic tapes; and other optical and non-optical data storage devices. The computer readable medium can also be distributed over a network coupled computer systems so that the computer readable code is stored and executed in a distributed fashion. The computer readable medium can also comprise a transient medium i.e. a signal such as an optical, magnetic, electrical, acoustic, microwave, rf or electromagnetic signal.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive.

## Claims

1. A system for storing preferences on a telematics client, comprising:
a telematics server (106; 116; 448) configured to receive a request containing modification data for a preference, and to store the modification data for the preference in a storage (450) of a preference server of the telematics server, the telematics server including a server side communications framework (118) in communication with the preference server;
a telematics control unit (102) having a preference manager (466) for storing the preferences, the telematics control unit including a client side communications framework (112; 416; 516a) in communication with the preference manager (466),
wherein the preference manager and the preference server (458) are configured to synchronize over a network connection (104; 114; 446) to allow the modification data to be communicated between the preference server (458) and the preference manager (466), wherein the telematics control unit includes a software stack (110; 121; 452) having a hardware layer (120), an operating system layer (122; 122a), a Java virtual machine layer (124, 124a), an open services gateway initiative layer (126; 126a) and a Java telematics client layer (460), and wherein the telematics control unit includes a channel monitor configured to monitor available channels, and a data multiplexer and flow controller having a connection object configured to switch to a channel within the network having a higher bandwidth based upon availability.

2. The system of claim 1, wherein the preference is one of a system preference, an application preference and a user preference.

3. The system of any preceding claim, wherein synchronization between the telematics server (106; 116; 448) and the telematics control unit (102) is established through a connection object (418a).

4. The system of any preceding claim, wherein a synchronization control enables communication between the client side communications framework (112; 416; 516a), and the server side communications framework (118).

5. The system of any preceding claim, wherein the client side communications framework (112; 416; 516a) includes the data mutliplexer and the flow controller (415; 518c).

6. The system of any preceding claim, wherein the server side communications framework (118) includes a data mutliplexer and a flow controller (518s).

7. The system of claim 3, wherein the connection object (418a) of the client side has the ability to switch between channels (425) available to the client side communication framework (112; 416; 516a).

8. A telematics control unit (102), comprising:
a preference manager (466) for storing preferences;
a client side communications framework (112; 416; 516a) in communication with the preference manager;
a software stack (110; 452) having a hardware layer (120), an operating system layer (122), a Java virtual machine layer (124; 124a), an open services gateway initiative layer (126; 126a) and Java telematics client layer (460); and
a channel monitor configured to monitor available channels and a data multiplexer and flow controller having a connection object configured to switch to a channel within a network having a higher bandwidth based upon availability;
wherein the preference manager is configured to synchronise with a preference server of a telematics server (106; 116; 448), the telematics server being configured to receive a request containing modification data for a preference, the modification data being stored on said preference server, and said synchronisation allowing the modification data to be communicated between the preference server and the preference manager (466).

9. The telematics control unit of claim 8, wherein the preference is one of a system preference, an application preference and a user preference.

10. The telematic control unit of claim 8 or 9, wherein the Java Telematics Client layer (460) further includes:
carlets(402a, 402b, 402n) executed by the Java Telematics Client layer, the carlets executing functionality specified by the preference.

11. The telematics control unit of any one of claims 8 to 10, wherein the client side communications framework (112; 416; 516a) further includes:
a message manager (417; 517) providing one way communication;
a stream manager (419; 519) providing two way communication, the stream manager (419; 519) configured to receive a request that a connection be established from a carlet(402a, 402b, 402n); and
the data mutliplexer and the flow controller (415; 518c), which are configured to receive a request from the stream manager (419; 519) for a connection object (418a), wherein in response to the request, the data mutliplexer and the flow controller (415; 518c) are adapted to return a connection object (418a) to the carlet (402a, 402b, 402n) to establish a connection.

12. A method for storing preferences associated with a telematics system, comprising:
receiving at a telematics server (106;116; 448) a request containing modification data for a preference;
storing the modification data in storage of a preference server of said telematics server (106; 116; 448);
synchronizing the preference server with a preference manager (466) of a telematics control unit (102), the telematics control unit comprising a software stack (110; 121; 452) having a hardware layer (120), an operating system layer (122; 122a), a Java virtual machine layer (124; 124a), an open services gateway initiative layer (126; 126a) and a Java telematics client layer (460), the telematics control unit further comprising a channel monitor and a data multiplexer and flow controller having a connection object, the method comprising:
the channel monitor monitoring available channels;
the connection object of the data multiplexer and flow controller switching to a channel within a network having a higher bandwidth based upon availability;
and
transmitting the modification data to the preference manager (466), the modification data being stored in storage of the telematics control unit (102).

13. The method of claim 12, wherein the method operation of synchronizing the preference server with a preference manager further includes:
requesting a connection object (418a) from a data multiplexer and flow controller (415; 518c); and determining whether a desired channel (425) is available.

14. The method of claim 12 or 13, wherein the preference is one of a system preference, an application preference and a user preference.

15. The method of any one of claims 12 or 13, wherein the preference is a system preference including one of a vehicle identification number, a driver's license number, a license plate number and a telephone number for connecting to a server.

16. The method of any one of claims 12 or 13, wherein the preference is a user preference being an infotainment or convenience preference.

17. The method of any one of claims 12 or 16, wherein receiving said modification data further includes;
receiving said modification data over a distributed network (446) in communication with the preference server (466), the modification data comprising a preference input through a user interface.

18. The method of claim 17, wherein the user interface is a web page.

19. The method of any one of claims 12 to 18, wherein the method operation of synchronizing the preference server with a preference manager of a telematics control unit (102) further includes:
initiating the synchronization upon power-up of the telematics control unit (102).

20. A carrier medium carrying processor readable code for controlling a processor to carry out all the method steps of any one of claims 12 to 19.

21. A method for storing preferences at a telematics control unit (102), the telematics control unit comprising a preference manager (466) for storing preferences, a client side communications framework (112; 416; SI6a) in communication with the preference manager, and a software stack (110; 452) having a hardware layer (120), an operating system layer (122), a Java virtual machine layer (124; 124a), an open services gateway initiative layer (126; 126a) and a Java telematics client layer (460), the telematics control unit further comprising a channel monitor and a data multiplexer and flow controller having a connection object, the method comprising:
the channel monitor monitoring available channels;
the connection object of the data multiplexer and flow controller switching to a channel within a network having a higher bandwidth based upon availability; and
synchronising said preference manager with a preference server of a telematic server, said synchronisation causing modification data to be communicated between the preference server and the preference manager (466);
wherein the telematics server (106; 116; 448) is configured to receive a request containing modification data for a preference, the modification data being stored on said preference server.

22. A method according to claim 21, wherein the preference is one of a system preference, an application preference and a user preference.

23. A carrier medium carrying processor readable code for controlling a processor to carry out all the method steps of claim 21 or 22.

## Patentansprüche

1. System zum Speichern von Präferenzen auf einem Telematik-Client, umfassend:
einen Telematik-Server (106; 116; 448), konfiguriert, um eine Anforderung zu empfangen, die Änderungsdaten für eine Präferenz enthält, und um die Änderungsdaten für die Präferenz in einem Speicher (450) eines Präferenz-Servers des Telematik-Servers zu speichern, wobei der Telematik-Server ein serverseitiges Communications-Framework (118) aufweist, das mit dem Präferenz-Server in Verbindung steht;
eine Telematik-Steuereinheit (102), die einen Präferenz-Manager (466) zum Speichern der Präferenzen aufweist, wobei die Telematik-Steuereinheit ein clientseitiges Communications-Framework (112; 416; 516a) einschließt, das mit dem Präferenz-Manager (466) in Verbindung steht, wobei der Präferenz-Manager und der Präferenz-Server (458) konfiguriert sind, um sich über eine Netzwerkverbindung (104; 114; 446) zu synchronisieren, um die Übertragung der Änderungsdaten zwischen dem Präferenz-Server (458) und dem Präferenz-Manager (466) zu erlauben, wobei die Telematik-Steuereinheit einen Softwarestapel (110; 121; 452) umfasst, der eine Hardware-Layer (120), eine Betriebssystem-Layer (122; 122a), eine Java Virtual Machine-Layer (124, 124a), eine Open Services Gateway Initiative-Layer (126; 126a) und eine Java Telematics Client-Layer (460) einschließt, und wobei die Telematik-Steuereinheit einen Channel-Monitor umfasst, der konfiguriert ist, um verfügbare Kanäle zu überwachen, und einen Datenmultiplexer und einen Flow-Controller mit einem Connection-Objekt, konfiguriert, um auf der Basis der Verfügbarkeit auf einen Kanal im Netzwerk umzuschalten, der eine höhere Bandbreite aufweist.

2. System nach Anspruch 1, wobei die Präferenz eines von einer Systempräferenz, einer Anwendungspräferenz und einer Benutzerpräferenz ist.

3. System nach einem der obigen Ansprüche, wobei die Synchronisation zwischen dem Telematik-Server (106; 116; 448) und der Telematik-Steuereinheit (102) durch ein Connection-Objekt (418a) hergestellt wird.

4. System nach einem der obigen Ansprüche, wobei eine Synchronisationssteuerung die Kommunikation zwischen dem clientseitigen Communications-Framework (112; 416; 516a) und dem serverseitigen Communications-Framework (118) erlaubt.

5. System nach einem der obigen Ansprüche, wobei das clientseitige Communications-Framework (112; 416; 516a) den Datenmultiplexer und den Flow-Controller (415, 518c) umfasst.

6. System nach einem der obigen Ansprüche, wobei das serverseitige Communications-Framework (118) einen Datenmultiplexer und einen Flow-Controller (518s) umfasst.

7. System nach Anspruch 3, wobei das Connection-Objekt (418a) der Clientseite die Fähigkeit aufweist, zwischen Kanälen (425) umzuschalten, die dem clientseitigen Communications-Framework (112; 416; 516a) verfügbar sind.

8. Telematik-Steuereinheit (102), umfassend:
einen Präferenz-Manager (466) zum Speichern von Präferenzen;
ein clientseitiges Communications-Framework (112; 416; 516a), das mit dem Präferenz-Manager in Verbindung steht;
einen Softwarestapel (110; 452), der eine Hardware-Layer (120), eine Betriebssystem-Layer (122), eine Java Virtual Machine-Layer (124, 124a), eine Open Services Gateway Initiative-Layer (126; 126a) und eine Java Telematics Client-Layer (460) einschließt; und
einen Channel-Monitor, konfiguriert, um verfügbare Kanäle zu überwachen, und einen Datenmultiplexer und einen Flow-Controller mit einem Connection-Objekt, konfiguriert, um auf der Basis der Verfügbarkeit auf einen Kanal im Netzwerk umzuschalten, der eine höhere Bandbreite aufweist;
wobei der Präferenz-Manager konfiguriert ist, um sich mit einem Präferenz-Server eines Telematik-Servers (106; 116; 448) zu synchronisieren, der Telematik-Server konfiguriert ist, um eine Anforderung zu empfangen, die Änderungsdaten für eine Präferenz enthält, die Änderungsdaten auf diesem Präferenz-Server gespeichert werden, und die Synchronisation die Übertragung der Änderungsdaten zwischen dem Präferenz-Server und dem Präferenz-Manager (466) erlaubt.

9. Telematik-Steuereinheit nach Anspruch 8, wobei die Präferenz eines von einer Systempräferenz, einer Anwendungspräferenz und einer Benutzerpräferenz ist.

10. Telematik-Steuereinheit nach Anspruch 8 oder 9, wobei die Java Telematics Client-Layer (460) außerdem umfasst:
Carlets (402a, 402b, 402n), die von der Java Telematics Client-Layer ausgeführt werden, wobei die Carlets Funktionen ausführen, die durch die Präferenz spezifiziert werden.

11. Telematik-Steuereinheit nach einem der Ansprüche 8 bis 10, wobei das clientseitige Communications-Framework (112; 416; 516a) außerdem umfasst:
einen Message-Manager (417; 517), der eine einfachgerichtete Kommunikation gewährleistet;
einen Stream-Manager (419; 519), der eine zweifachgerichtete Kommunikation gewährleistet, wobei der Stream-Manager (419; 519) konfiguriert ist, um eine Anforderung zu empfangen, dass eine Verbindung von einem Carlet (402a, 402b, 402n) herzustellen ist; und
der Datenmultiplexer und der Flow-Controller (415; 518c) konfiguriert sind, um vom Stream-Manager (419; 519) eine Anforderung nach einem Connection-Objekt (418a) zu empfangen, wobei der Datenmultiplexer und der Flow-Controller (415; 518c) geeignet sind, in Antwort auf die Anforderung ein Connection-Objekt (418a) an das Carlet (402a, 402b, 402n) zurückzugeben, um eine Verbindung herzustellen.

12. Verfahren zum Speichern von Präferenzen in Verbindung mit einem Telematik-System, umfassend:
das Empfangen, in einem Telematik-Server (106; 116; 448), einer Anforderung, die Änderungsdaten für eine Präferenz enthält;
das Speichern der Änderungsdaten im Speicher eines Präferenz-Servers dieses Telematik-Servers (106; 116; 448);
das Synchronisieren des Präferenz-Servers mit einem Präferenz-Manager (466) einer Telematik-Steuereinheit (102), wobei die Telematik-Steuereinheit einen Softwarestapel (110; 121; 452) umfasst, der eine Hardware-Layer (120), eine Betriebssystem-Layer (122; 122a), eine Java Virtual Machine-Layer (124, 124a), eine Open Services Gateway Initiative-Layer (126; 126a) und eine Java Telematics Client-Layer (460) einschließt, und wobei die Telematik-Steuereinheit außerdem einen Channel-Monitor und einen Datenmultiplexer und einen Flow-Controller mit einem Connection-Objekt umfasst,
wobei das Verfahren umfasst:
Das Überwachen der verfügbaren Kanäle durch den Channel-Monitor,
Das Umschalten des Connection-Objekts des Datenmultiplexers und Flow Controllers auf einen Kanal im Netzwerk mit einer höheren Bandbreite auf der Basis der Verfügbarkeit,
und
das Übertragen der Änderungsdaten zum Präferenz-Manager (466), wobei die Änderungsdaten im Speicher der Telematik-Steuereinheit (102) gespeichert werden.

13. Verfahren nach Anspruch 12, wobei der Verfahrensschritt des Synchronisierens des Präferenz-Servers mit einem Präferenz-Manager außerdem umfasst:
das Anfordern eines Connection-Objekts (418a) von einem Datenmultiplexer und Flow-Controller (415; 518c); und das Bestimmen, ob ein gewünschter Kanal (425) verfügbar ist.

14. Verfahren nach Anspruch 12 oder 13, wobei die Präferenz eine von einer Systempräferenz, einer Anwendungspräferenz und einer Benutzerpräferenz ist.

15. Verfahren nach einem der Ansprüche 12 oder 13, wobei die Präferenz eine Systempräferenz ist, die eines von einer Fahrzeug-Identifizierungsnummer, einer Führerscheinnummer, einer Zulassungsnummer und einer Telefonnummer zur Verbindung mit einem Server einschließt.

16. Verfahren nach einem der Ansprüche 12 oder 13, wobei die Präferenz eine Benutzerpräferenz ist, die eine Infotainment- oder Komfortpräferenz ist.

17. Verfahren nach einem der Ansprüche 12 oder 16, wobei das Empfangen der Änderungsdaten außerdem umfasst:
das Empfangen dieser Änderungsdaten über ein verteiltes Netzwerk (446), das mit dem Präferenz-Server (466) in Verbindung steht, wobei die Änderungsdaten eine Präferenzeingabe durch eine Benutzerschnittstelle umfassen.

18. Verfahren nach Anspruch 17, wobei die Benutzerschnittstelle eine Webseite ist.

19. Verfahren nach einem der Ansprüche 12 bis 18, wobei der Verfahrensschritt des Synchronisierens des Präferenz-Servers mit einem Präferenz-Manager einer Telematik-Steuereinheit (102) außerdem umfasst:
das Initiieren der Synchronisation beim Einschalten der Telematik-Steuereinheit (102).

20. Datenträger, der prozessorlesbaren Code zur Steuerung eines Prozessors trägt, um alle Verfahrensschritte nach jedem der Ansprüche 12 bis 19 auszuführen.

21. Verfahren zum Speichern von Präferenzen in einer Telematik-Steuereinheit (102), wobei die Telematik-Steuereinheit einen Präferenz-Manager (466) zum Speichern von Präferenzen aufweist, ein clientseitiges Communications-Framework (112; 416; 516a), das mit dem Präferenz-Manager in Verbindung steht, und einen Softwarestapel (110; 452), der eine Hardware-Layer (120), eine Betriebssystem-Layer (122), eine Java Virtual Machine-Layer (124, 124a), eine Open Services Gateway Initiative-Layer (126; 126a) und eine Java Telematics Client-Layer (460) einschließt, wobei die Telematik-Steuereinheit außerdem einen Channel-Monitor und einen Datenmultiplexer und einen Flow-Controller mit einem Connection-Objekt aufweist, wobei das Verfahren umfasst:
das Überwachen verfügbarer Kanäle durch den Channel-Monitor;
das Umschalten des Connection-Objekts des Datenmultiplexers und Flow Controllers auf einen Kanal im Netzwerk mit einer höheren Bandbreite auf der Basis der Verfügbarkeit; und
das Synchronisieren des Präferenz-Managers mit einem Präferenz-Server eines Telematik-Servers, wobei diese Synchronisation bewirkt, dass die Änderungsdaten zwischen dem Präferenz-Server und dem Präferenz-Manager (466) übertragen werden;
wobei der Telematik-Server (106; 116; 448) konfiguriert ist, um eine Anforderung zu empfangen, die Änderungsdaten für eine Präferenz enthält, wobei die Änderungsdaten auf dem Präferenzserver gespeichert werden.

22. Verfahren nach Anspruch 21, wobei die Präferenz eines von einer Systempräferenz, einer Anwendungspräferenz und einer Benutzerpräferenz ist.

23. Datenträger, der prozessorlesbaren Code zur Steuerung eines Prozessors trägt, um alle Verfahrensschritte von Anspruch 21 oder 22 auszuführen.

## Revendications

1. Système pour stocker des préférences concernant un client de télématique, comprenant:
un serveur de télématique (106; 116; 448) configuré pour recevoir une requête qui contient des données de modification pour une préférence et pour stocker les données de notification pour la préférence dans un stockage (450) d'un serveur de préférence du serveur de télématique, le serveur de télématique incluant un logiciel intégré de communication du côté serveur (118) en communication avec le serveur de préférence;
une unité de commande de télématique (102) comportant un gestionnaire de préférence (466) pour stocker les préférences, l'unité de commande de télématique incluant un logiciel intégré de communication du côté client (112; 416; 516a) en communication avec le gestionnaire de préférence (466), où le gestionnaire de préférence et le serveur de préférence (458) sont configurés pour réaliser une synchronisation sur une connexion de réseau (104; 114; 446) pour permettre que les données de modification soient communiquées entre le serveur de préférence (458) et le gestionnaire de préférence (466), où l'unité de commande de télématique inclut une pile de logiciel (110; 121; 452) comportant une couche hardware (120), une couche de système d'exploitation (122; 122a), une couche de machine virtuelle Java (124, 124a), une couche d'initiative de passerelle de service ouvert (126; 126a) et une couche de client de télématique Java (460), et où l'unité de commande de télématique inclut un moniteur de canal configuré pour surveiller des canaux disponibles, et un multiplexeur de données et un contrôleur de flux comportant un objet de connexion configuré pour réaliser une commutation sur un canal à l'intérieur du réseau présentant une bande passante plus élevée sur la base de la disponibilité.

2. Système selon la revendication 1, dans lequel la préférence est une préférence prise parmi une préférence système, une préférence d'application et une préférence d'utilisateur.

3. Système selon l'une quelconque des revendications précédentes, dans lequel une synchronisation entre le serveur de télématique (106; 116; 448) et l'unité de commande de télématique (102) est établie par l'intermédiaire d'un objet de connexion (418a).

4. Système selon l'une quelconque des revendications précédentes, dans lequel une commande de synchronisation permet une communication entre le logiciel intégré de communication du côté client (112; 416; 516a) et le logiciel intégré de communication du côté serveur (118).

5. Système selon l'une quelconque des revendications précédentes, dans lequel le logiciel intégré de communication du côté client (112; 416; 516a) inclut le multiplexeur de données et le contrôleur de flux (415; 518c).

6. Système selon l'une quelconque des revendications précédentes, dans lequel le logiciel intégré de communication du côté serveur (118) inclut un multiplexeur de données et un contrôleur de flux (518s).

7. Système selon la revendication 3, dans lequel l'objet de connexion (418a) du côté client dispose de la capacité de réaliser une commutation entre des canaux (425) disponibles sur le logiciel intégré de communication du côté client (112; 416; 516a).

8. Unité de commande de télématique (102), comprenant:
un gestionnaire de préférence (466) pour stocker des préférences;
un logiciel intégré de communication du côté client (112; 416; 516a) en communication avec le gestionnaire de préférence;
une pile de logiciel (110; 452) comportant une couche hardwarw (120), une couche de système d'exploitation (122), une couche de machine virtuelle Java (124; 124a), une couche d'initiative de passerelle de service ouvert (126; 126a) et une couche de client de télématique Java (460); et
un moniteur de canal configuré pour surveiller des canaux disponibles et un multiplexeur de données et un contrôleur de flux comportant un objet de connexion configuré pour réaliser une commutation sur un canal à l'intérieur d'un réseau présentant une bande passante plus élevée sur la base de la disponibilité,
dans laquelle le gestionnaire de préférence est configuré pour réaliser une synchronisation avec un serveur de préférence d'un serveur de télématique (106; 116; 448), le serveur de télématique étant configuré pour recevoir une requête contenant des données de modification pour une préférence, les données de modification étant stockées sur ledit serveur de préférence, et ladite synchronisation permettant que les données de modification soient communiquées entre le serveur de préférence et le gestionnaire de préférence (466).

9. Unité de commande de télématique selon la revendication 8, dans laquelle la préférence est une préférence prise parmi une préférence système, une préférence d'application et une préférence d'utilisateur.

10. Unité de commande de télématique selon la revendication 8 ou 9, dans laquelle la couche de client de télématique Java (460) inclut en outre:
des carlets (402a, 402b, 402n) exécutés par la couche de client de télématique Java, les carlets exécutant une fonctionnalité spécifiée par la préférence.

11. Unité de commande de télématique selon l'une quelconque des revendications 8 à 10, dans laquelle le logiciel intégré de communication du côté client (112; 416; 516a) inclut en outre:
un gestionnaire de message (417; 517) assurant une communication monodirectionnelle;
un gestionnaire de flux de données (419; 519) assurant une communication bidirectionnelle, le gestionnaire de flux de données (419; 519) étant configuré pour recevoir une requête consistant en ce qu'une connexion soit établie depuis un carlet (402a, 402b, 402n); et
le multiplexeur de données et le contrôleur de flux (415; 518c) qui sont configurés pour recevoir une requête en provenance du gestionnaire de flux de données (419; 519) pour un objet de connexion (418a), où, en réponse à la requête, le multiplexeur de données et le contrôleur de flux (415; 518c) sont adaptés pour retourner un objet de connexion (418a) sur le carlet (402a, 402b, 402n) pour établir une connexion.

12. Procédé pour stocker des préférences associées à un système de télématique, comprenant:
la réception, au niveau d'un serveur de télématique (106; 116; 448) d'une requête contenant des données de modification pour une préférence;
le stockage des données de modification dans un stockage d'un serveur de préférence dudit serveur de télématique (106; 116; 448);
la synchronisation du serveur de préférence avec un gestionnaire de préférence (466) d'une unité de commande de télématique (102), l'unité de commande de télématique comprenant une pile de logiciel (110; 121; 452) comportant une couche hardware (120), une couche de système d'exploitation (122; 122a), une couche de machine virtuelle Java (124; 124a), une couche d'initiative de passerelle de service ouvert (126; 126a) et une couche de client de télématique Java (460), l'unité de commande de télématique comprenant en outre un moniteur de canal et un multiplexeur de données et un contrôleur de flux comportant un objet de connexion,
le procédé comprenant:
le moniteur de canal qui surveille les canaux disponibles;
l'objet de connexion du multiplexeur de données et du contrôleur de flux qui réalise une commutation sur un canal à l'intérieur d'un réseau présentant une bande passante plus élevée sur la base de la disponibilité; et
la transmission des données de modification au gestionnaire de préférence (466), les données de modification étant stockées dans un stockage de l'unité de commande de télématique (102).

13. Procédé selon la revendication 12, dans lequel l'opération de procédé de synchronisation du serveur de préférence avec un gestionnaire de préférence inclut en outre:
la demande d'un objet de connexion (418a) auprès d'un multiplexeur de données et d'un contrôleur de flux (415; 518c); et la détermination de si un canal souhaité (425) est disponible ou non.

14. Procédé selon la revendication 12 ou 13, dans lequel la préférence est une préférence prise parmi une préférence système, une préférence d'application et une préférence d'utilisateur.

15. Procédé selon l'une quelconque des revendications 12 ou 13, dans lequel la préférence est une préférence système incluant un élément pris parmi un numéro d'identification de véhicule, un numéro de permis de conduire, un numéro de plaque d'immatriculation et un numéro de téléphone pour une connexion sur un serveur.

16. Procédé selon l'une quelconque des revendications 12 ou 13, dans lequel la préférence est une préférence d'utilisateur qui est une préférence d'infoloisir ou de commodité.

17. Procédé selon l'une quelconque des revendications 12 ou 16, dans lequel la réception desdites données de modification inclut en outre:
la réception desdites données de modification sur un réseau distribué (446) en communication avec le serveur de préférence (466), les données de modification comprenant une préférence qui est entrée par l'intermédiaire d'une interface d'utilisateur.

18. Procédé selon la revendication 17, dans lequel l'interface d'utilisateur est une page web.

19. Procédé selon l'une quelconque des revendications 12 à 18, dans lequel l'opération de procédé de synchronisation du serveur de préférence avec un gestionnaire de préférence d'une unité de commande de télématique (102) inclut en outre:
l'initiation de la synchronisation suite à la mise en route de l'unité de commande de télématique (102).

20. Support d'information porteur d'un code lisible par processeur pour commander un processeur pour mettre en oeuvre toutes les étapes de procédé selon l'une quelconque des revendications 12 à 19.

21. Procédé pour stocker des préférences au niveau d'une unité de commande de télématique (102), l'unité de commande de télématique comprenant un gestionnaire de préférence (466) pour stocker des préférences, un logiciel intégré de communication du côté client (112; 416; 516a) en communication avec le gestionnaire de préférence et une pile de logiciel (110; 452) comportant une couche hardware (120), une couche de système d'exploitation (122), une couche de machine virtuelle Java (124; 124a), une couche d'initiative de passerelle de service ouvert (126; 126a) et une couche de client de télématique Java (460), l'unité de commande de télématique comprenant en outre un moniteur de canal et un multiplexeur de données et un contrôleur de flux comportant un objet de connexion, le procédé comprenant:
le moniteur de canal qui surveille des canaux disponibles;
l'objet de connexion du multiplexeur de données et du contrôleur de flux qui réalise une commutation sur un canal à l'intérieur d'un réseau présentant une bande passante plus élevée sur la base de la disponibilité; et
la synchronisation dudit gestionnaire de préférence avec un serveur de préférence d'un serveur télématique, ladite synchronisation générant le fait que des données de modification sont communiquées entre le serveur de préférence et le gestionnaire de préférence (466),
Le serveur de télématique (106; 116; 448) étant configuré pour recevoir une requête qui contient des données de modification pour une préférence, les données de modification étant stockées sur ledit serveur de préférence.

22. Procédé selon la revendication 21, dans lequel la préférence est une préférence prise parmi une préférence système, une préférence d'application et une préférence d'utilisateur.

23. Support d'information porteur d'un code lisible par processeur pour commander un processeur pour mettre en oeuvre toutes les étapes de procédé de la revendication 21 ou 22.
